(19) Europäisches Patentamt
European Patent Office
Office européen des brevets

(11) **EP 2 634 924 A1**

(12) **EUROPEAN PATENT APPLICATION**
published in accordance with Art. 153(4) EPC

(43) Date of publication:
 **04.09.2013 Bulletin 2013/36**

(51) Int Cl.:
 *H04B 1/40* (2006.01)     *H04W 56/00* (2009.01)

(21) Application number: **10858931.8**

(86) International application number:
 **PCT/JP2010/069137**

(22) Date of filing: **28.10.2010**

(87) International publication number:
 **WO 2012/056542 (03.05.2012 Gazette 2012/18)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**

(72) Inventor: **NAGAMINE, Hiroaki**
 **Kawasaki-shi**
 **Kanagawa 211-8588 (JP)**

(74) Representative: **Ward, James Norman**
 **Haseltine Lake LLP**
 **Lincoln House, 5th Floor**
 **300 High Holborn**
 **London WC1V 7JH (GB)**

(71) Applicant: **Fujitsu Limited**
 **Kawasaki-shi, Kanagawa 211-8588 (JP)**

(54) **WIRELESS COMMUNICATION DEVICE AND WIRELESS COMMUNICATION METHOD**

(57)     A timer controller (3) updates the value of a timer that is referred to by a reception processing unit (1) and a transmission processing unit (2). The reception processing unit (1) detects timing information included in a received signal and obtains the amount of discrepancy between the detected timing information and timing information obtained from the timer controller (3). The reception processing unit (1) determines a timing for the received signal based on the obtained amount of discrepancy. The reception processing unit (1) also stores the obtained amount of discrepancy to memory (4). The transmission processing unit (2) reads out the amount of discrepancy from the memory (4) and determines a timing for the transmission signal based on the read-out amount of discrepancy.

FIG.1

**Description**

TECHNICAL FIELD

The present invention relates to a radio communication apparatus and a radio communication method.

BACKGROUND ART

Conventionally, communication speed in mobile radio communication systems has increased. Because of this, there has been an increase in the volume of calculation necessary for modulation and demodulation processing. Accordingly, configuration may be such that, with the demodulation processing on the receiving side and the modulation processing on the transmitting side performed by separate hardware blocks and processors such as digital signal processors (DSPs), the modulation and demodulation processing will be finished within a limited time.

Meanwhile, in a radio communication system in which a base station transmits the time as a reference to a terminal and the terminal performs time management based on the received time, there is a technology of demodulating a modulated transmission signal, detecting a delay time at the time of the demodulation, and adjusting a starting time of transmission processing, using the detected delay time. In a transceiver performing transmission and reception with different timings and intermittently, there is a technology of controlling a power source so that, to reduce power consumption, a transmitting circuit will be operated only during a data transmission period and a receiving circuit will be operated only during a data reception period.

Patent Document 1: Japanese Laid-Open Patent Publication No. H7-131408

Patent Document 2: Japanese Laid-Open Patent Publication No. H7-212269

DISCLOSURE OF INVENTION

PROBLEM TO BE SOLVED BY THE INVENTION

In the case of performing the demodulation processing on the receiving side and the modulation processing on the transmitting side by different hardware blocks and processors, however, there is the following problem. For example, it is possible that a predetermined timing difference is prescribed between a downlink signal to be subject to the demodulation processing and an uplink signal to be subject to the modulation processing. An example of such a system is, for example, a high speed packet access (HSPA) + system called 3.5 generation in wideband code division multiple access (WCDMA) mobile radio communication.

The third generation partnership project (3GPP) specifies, in the state of performing dedicated channel communication, the timing difference between a downlink dedicated physical channel (DL DPCH) and an uplink dedicated physical channel (UL DPCH) as 1024 chips (see 3GPP TS 25.211 V8.6.0 (2009-12)). Therefore, there must be a matching of timing recognition of a control operation, with respect to the hardware and firmware for control of the hardware to be arranged in the DSP.

The terminal can recognize the timing of a radio signal by executing a cell search and a path search. Cell search processing and path search processing, however, are incorporated in a demodulation processing block of the terminal but are not incorporated in a modulation processing block. Therefore, when the modulation processing block and the demodulation processing block are configured by physically different pieces of hardware, the timing (e.g., slot number) of the radio signal detected in the demodulation processing block is reported to the modulation processing block. Since, in the process of such reporting, a delay is caused in the signal transfer between the blocks, a delay occurs in the transfer of the timing of the radio signal. Since a discrepancy, corresponding to such a delay, in the recognition of the slot boundary is caused between the modulating processing block and the demodulation processing block, synchronizing of the timings becomes difficult.

An object of the present invention is to provide a radio communication apparatus and a radio communication method that can synchronize the timings between a modulation processing block and a demodulation processing block.

MEANS FOR SOLVING PROBLEM

A radio communication apparatus includes a reception processing unit, a transmission processing unit, a timer controller, and memory. The reception processing unit processes a received signal. The reception processing unit obtains an amount of discrepancy between timing information included in the received signal and timing information obtained from the timer controller, determines the timing for the received signal based on the amount of discrepancy, and stores the amount of discrepancy to the memory. The transmission processing unit processes a transmission signal. The transmission processing unit reads out the amount of discrepancy from the memory and determines the timing for the transmission signal based on the amount of discrepancy. The timer controller updates a value of a timer referred to by the reception processing unit and the transmission processing unit. The memory stores the amount of discrepancy output from the reception processing unit.

A radio communication method includes the following process. A reception processing unit detects timing information included in a received signal. The reception processing unit obtains the amount of discrepancy between the detected timing information and timing information obtained from a timer controller. The reception processing unit determines the timing for the received signal, based on the obtained amount of discrepancy. The reception processing unit transfers the obtained amount of discrepancy to a transmission processing unit. The transmission processing unit determines the timing of a transmission signal, based in the amount of discrepancy transferred from the reception processing unit.

EFFECT OF THE INVENTION

According to the radio communication apparatus and the radio communication method, timings can be synchronized between the modulation processing block and the demodulation processing block.

BRIEF DESCRIPTION OF DRAWINGS

FIG. 1 is a block diagram of a radio communication apparatus according to a first embodiment;
FIG. 2 is a flowchart of a radio communication method according to the first embodiment;
FIG. 3 is a block diagram of the radio communication apparatus according to a second embodiment;
FIG. 4 depicts a free-running counter in the radio communication apparatus according to the second embodiment;
FIG. 5 is an explanatory diagram of parameters of a reference timing;
FIG. 6 is an explanatory diagram of a DL DPCH and a UL DPCH;
FIG. 7 is a flowchart of an initial setting process of the radio communication method according to the second embodiment;
FIG. 8 is a flowchart of a correction process of the radio communication method according to the second embodiment;
FIG. 9 is a flowchart of the correction process of the radio communication method according to the second embodiment; and
FIG. 10 is a block diagram of the radio communication apparatus according to a third embodiment.

BEST MODE(S) FOR CARRYING OUT THE INVENTION

Embodiments of a radio communication apparatus and a radio communication method according to the present invention will be described in detail with reference to the accompanying drawings. The radio communication apparatus and the radio communication method obtain the amount of discrepancy between timing information included in a received signal and the timing information obtained from a timer and determine the timing for the received signal and a transmission signal, based on this amount of discrepancy and the timing information obtained from the timer. The present invention is not limited by the embodiments.

(First Embodiment)

Description of Radio Communication Apparatus

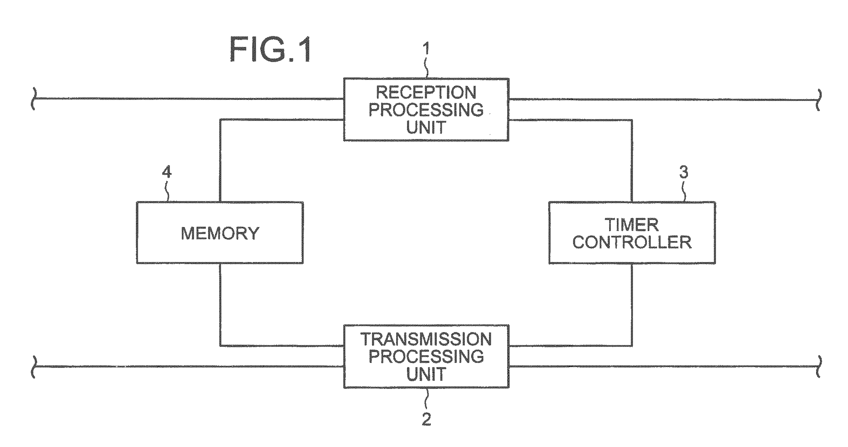

FIG. 1 is a block diagram of the radio communication apparatus according to a first embodiment. As depicted in FIG. 1, the radio communication apparatus has a reception processing unit 1, a transmission processing unit 2, a timer controller 3, and memory 4. The reception processing unit 1 processes a received signal. The reception processing unit 1 obtains the amount of discrepancy between the timing information included in the received signal and the timing information obtained from the timer controller 3 and determines the timing for the received signal, based on this amount of discrepancy. The reception processing unit 1 stores the amount of discrepancy to the memory 4. The transmission processing unit 2 processes a transmission signal. The transmission processing unit 2 reads out the amount of discrepancy from the memory 4 and determines the timing for the transmission signal, based on the amount of discrepancy. The timer controller 3 updates the value of a timer that can be referred to by the reception processing unit 1 and the transmission processing unit 2. The memory 4 stores the amount of discrepancy of the timing to be output from the reception processing unit 1.

Description of Radio Communication Method

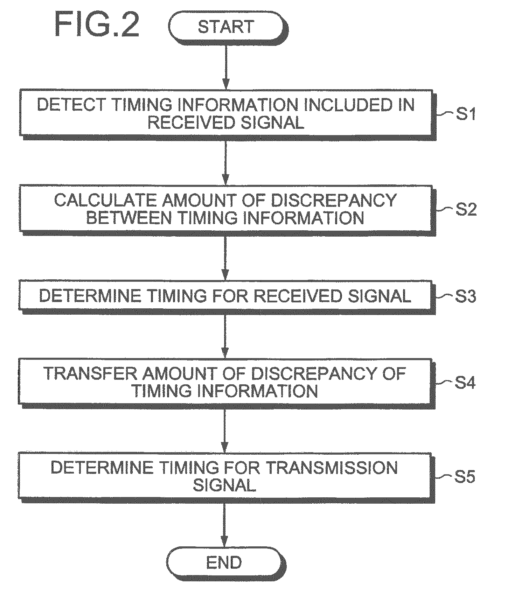

FIG. 2 is a flowchart of a radio communication method according to the first embodiment. As depicted in FIG. 1, upon starting of radio communication processing, the reception processing unit 1 detects the timing information included in the received signal (step S1). The recleption processing unit 1 obtains the amount of discrepancy between the detected timing information and the timing information obtained from the timer controller 3 (step S2). The reception processing unit 1 determines the timing for the received signal, based on the amount of discrepancy obtained at step S2 (step S3). The reception processing unit 1 transfers the obtained amount of discrepancy to the transmission processing unit 2 (step S4). The transmission processing unit 2 determines the timing for the transmission signal, based on the amount of discrepancy transferred from the reception processing unit 1 (step S5). The radio communication apparatus ends the series of operations. Step S4 may be performed before step S3 and steps S4 and S5 may be performed before step S3.

According to the first embodiment, since the reception processing unit 1 and the transmission processing unit 2 determine respective timings, based on the amount of discrepancy between the timing information included in the received signal and the timing information obtained from the timer controller 3, the timings can be synchronized between the reception processing unit 1 and the transmission processing unit 2. Therefore, the timings can be synchronized between the received signal demodulation processing block included in the reception processing unit 1 and the transmission signal modulation processing block included in the transmission processing unit 2.

(Second Embodiment)

A second embodiment is an application to a mobile radio communication system of a cellular phone, etc. For example, a second generation or third generation cellular phone system, a HSPA+ system, a long term evolution (LTE) system called 3.9 generation, or a fourth or subsequent generation cellular phone system can be cited as one example of the cellular phone system.

Description of Radio Communication Apparatus

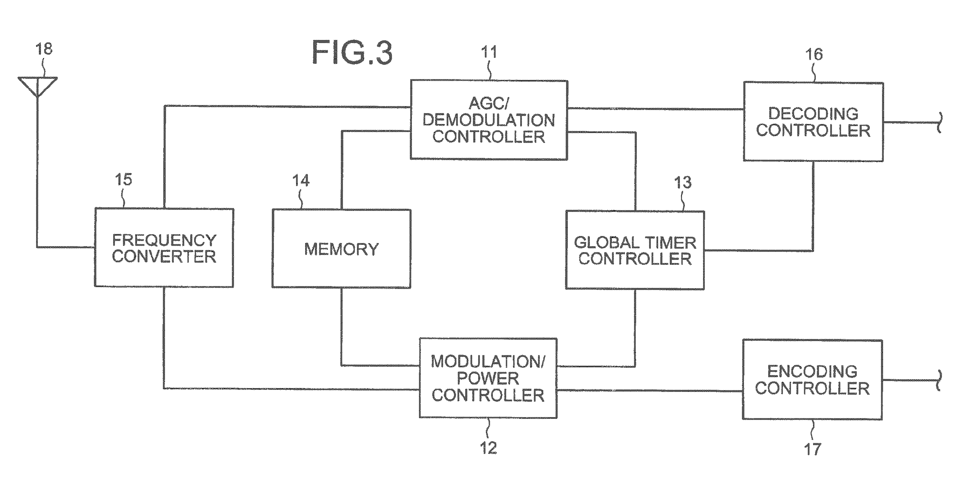

FIG. 3 is a block diagram of the radio communication apparatus according to the second embodiment. As depicted in FIG. 3, the radio communication apparatus according to the second embodiment has, for example, an automatic gain control (AGC)/demodulation controller 11 and a decoding controller 16 as, for example, the reception processing unit, a modulation/power controller 12 as, for example, the transmission processing unit, a global timer controller 13 as, for example, the timer controller, and memory 14. For example, the AGC/demodulation controller 11 may be implemented by hardware and hardware-control firmware to be arranged in a DSP. The modulation/power controller 12 may be implemented by the hardware and the hardware-control firmware to be arranged in the DSP and different from those for the AGC/demodulation controller 11.

The radio communication apparatus converts a radio frequency (RF) signal received by an antenna 18 to an intermediate frequency (IF) signal at a frequency converter 15. The AGC/demodulation controller 11 demodulates the IF signal output from the frequency converter 15 into a baseband signal and controls the output level of the baseband signal (demodulated signal) to be constant. The decoding controller 16 decodes the demodulated signal output from the AGC/demodulation controller 11.

The modulation/power controller 12 modulates the baseband signal encoded at an encoding controller 17 (encoded data) into the IF signal and controls transmission power. The radio communication apparatus converts the IF signal output from the modulation/power controller 12, into an RF signal at the frequency converter 15 and transmits the RF signal from the antenna 18.

The global timer controller 13 has, for example, a free-running counter to be described later. This free-running counter can be referred to by the AGC/demodulation controller 11, the modulation/power controller 12, and the decoding controller 16. The memory 14 stores parameters of a reference timing. The memory 14 can be accessed by the AGC/demodulation controller 11 and the modulation/power controller 12. For example, the amount of discrepancy between the timing information obtained by counting by the free-running counter and the timing information obtained from, for example, a common pilot channel (CPICH) sent by a non-depicted base station can be cited as an example of the parameters of the reference timing.

For example, a system frame timing (SFT) can be cited as an example of an amount of discrepancy. The SFT denotes, for example, a timing difference between a current value of the free-running counter and the head of a leading frame of the CPICH. A method of obtaining the SFT will be described later. If the SFT is obtained, the DL DPCH and the UL DPCH can be obtained. A method of obtaining the DL DPCH and the UL DPCH will be described later.

Description of Free-Running Counter

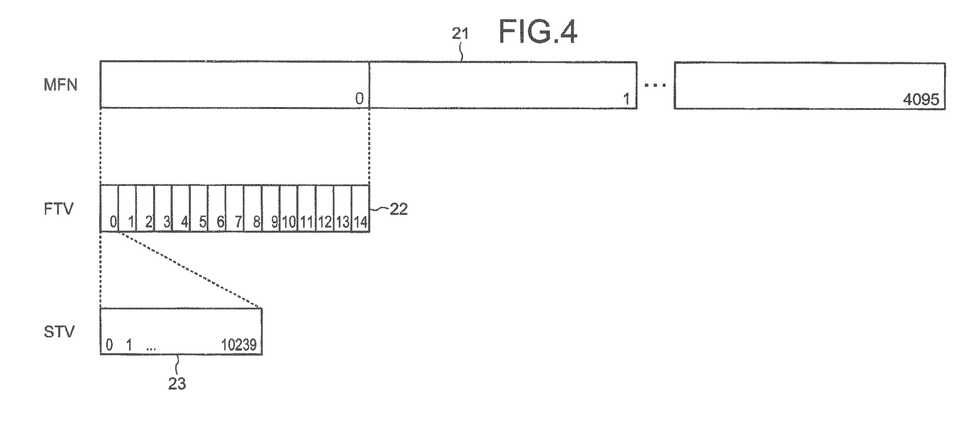

FIG. 4 depicts the free-running counter in the radio communication apparatus according to the second embodiment. As depicted in FIG. 4, the free-running counter has, for example, three parameters including a modem frame number (MFN) 21, a frame timing value (FTV) 22, and a slot timing value (STV) 23.

The free-running counter count each sample time, 10240 samples (slot timing value: 0 to 10239) making up one slot, 15 slots (frame timing value: 0 to 14) making up one frame, 4096 frames (modem frame number: 0 to 4095) making up one period. Thus, although in the second embodiment, the frame structure of the free-running counter is made the same as the frame structure of the CPICH, the frame structure of the free-running counter may be different.

Method of Obtaining Parameter SFT of Reference Timing

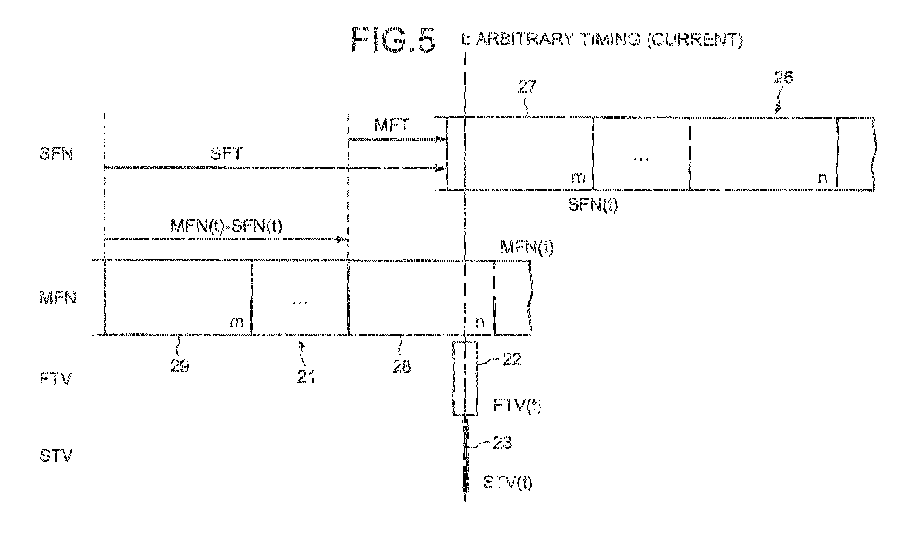

FIG. 5 is an explanatory diagram of the parameters of the reference timing. In FIG. 5, a system frame number (SFN) 26 represents the frame number of the CPICH. The AGC/demodulation controller 11 has a function of performing a path search and, by performing a path search, can detect the timing of the boundary between the CPICH frame at the time of performing the path search and the immediately preceding frame, namely, the head of the current frame of the CPICH.

The AGC/demodulation controller 11 can also detect the timing of the boundary between the frame of the free-running counter at the time of performing the path search and the immediately preceding frame, namely, the head of the current frame of the free-running counter. Therefore, the AGC/demodulation controller 11 detects a timing difference MFT (modem frame timing (also called path timing)) between the head of the current frame of the CPICH and the head of the current frame of the free-running counter.

In the example depicted in FIG. 5, the current frame of the CPICH is a frame 27 of the number m and the current frame of the free-running counter is a frame 28 of the number n. Accordingly, the timing difference between the head of the frame 27 having the SFN of m and the head of the frame 28 having the MFN of n is the MFT. The MFT is the timing difference of less than one frame.

The decoding controller 16, by decoding a synchronization-use channel, can detect the timing difference between the head of the frame of the free-running counter of the same number as that of the current frame of the CPICH and the head of the current frame of the free-running counter. This timing difference is given as a frame offset.

In the example depicted in FIG. 5, the frame of the free-running counter of the same number as number m of the current frame of the CPICH is a frame 29 of the number m. The current frame of the free-running counter is the frame 28 of the number n. Therefore, the frame offset is the timing difference between the head of the frame 29 of the number m and the head of the frame 28 of the number n. If the frame number of the free-running counter at timing t is expressed as MFN(t) and the frame number of the CPICH at timing t is expressed as SFN(t), then the frame offset can be expressed as Eq. (1).

$$\text{Frame offset [sample]} = (MFN(t) - SFN(t)) \text{ [frame]} \times 15$$
$$\text{[slot/frame]} \times 10240 \text{ [sample/slot]} \qquad (1)$$

If the frame offset is known, the AGC/demodulation controller 11 can obtain the parameter SFT of the reference timing. As depicted in FIG. 5, the parameter SFT of the reference timing is the frame offset expressed by Eq. (1) with the MFT added thereto. Therefore, the parameter SFT of the reference timing can be expressed by Eq. (2).

$$\text{SFT [sample]} = (MFN(t) - SFN(t)) \text{ [frame]} \times 15$$
$$\text{[slot/frame]} \times 10240 \text{ [sample/slot]} + MFT \qquad (2)$$

Method of Obtaining DL DPCH and UL DPCH

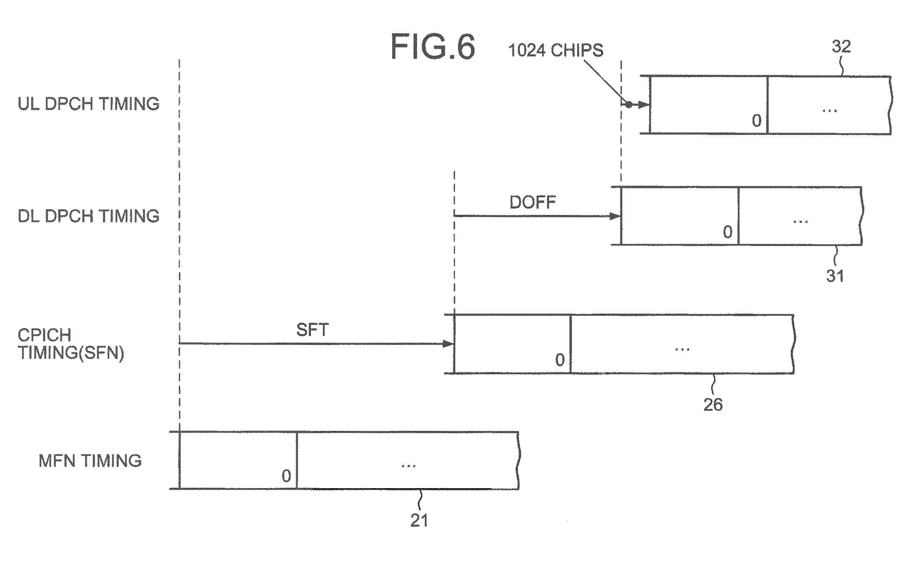

FIG. 6 is an explanatory diagram of the DL DPCH and the UL DPCH. In FIG. 6, a DPCH offset (DOFF) is an offset value of the head of the leading frame of the CPICH and the head of the leading frame of the DL DPCH. The DOFF is notified by an upper layer such as the network to the radio communication apparatus such as a terminal. Therefore, as depicted in FIG. 6, the AGC/demodulation controller 11 and the modulation/power controller 12 can obtain a DL DPCH timing 31 by adding the DOFF to the SFT. The DL DPCH timing can be expressed by Eq. (3).

$$DL\ DPCH\ timing=SFT+DOFF\ [sample] \qquad (3)$$

As described, since the timing difference between the DL DPCH and the UL DPCH is 1024 chips, the modulation/ power controller 12 can obtain a UL DPCH timing 32 by adding 1024 chips to the above DL DPCH timing. The UL DPCH timing can be expressed by Eq. (4).

$$UL\ DPCH\ timing=DL\ DPCH\ timing+1024\ [chips] \qquad (4)$$

Description of Radio Communication Method

For example, at the time of an initial setting when the communication by the dedicated channel is started, the above adjustment is performed with respect to the DL DPCH and the UL DPCH. When a path timing discrepancy occurs consequent to a network or environmental factor during communication by a dedicated channel, the above adjustment of the DL DPCH and the UL DPCH is performed at the time of correcting the discrepancy.

Initial setting process at Time of Starting Dedicated Channel Communication

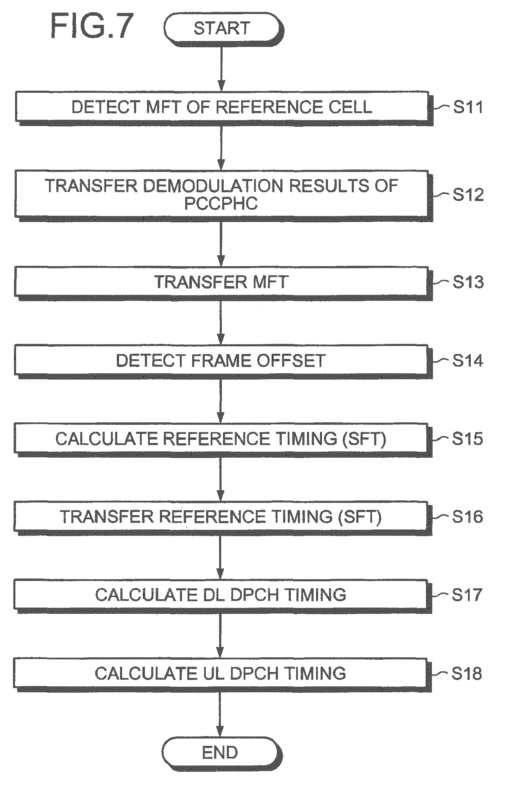

FIG. 7 is a flowchart of the initial setting process of the radio communication method according to the second embodiment. As depicted in FIG. 7, upon starting of the initial setting process at the time of starting the dedicated channel communication, the AGC/demodulation controller 11 performs a cell search and a path search to detect the MFT of the signal to be transmitted from a communication counterpart cell, namely, a reference cell (step S11). The AGC/demodulation controller 11 then demodulates a primary common control physical channel (PCGPCH) to transmit notification information and transfers results of the demodulation to the decoding controller 16 (step S12).
The AGC/demodulation controller 11 then transfers the MFT to the decoding controller 16 (step S13). The decoding controller 16 detects the frame offset expressed by Eq. (1) and notifies the AGC/demodulation controller 11 of the value of the frame offset (step S14). The AGC/demodulation controller 11 calculates the parameter SFT of the reference timing expressed by Eq. (2) (step S15).
The AGC/demodulation controller 11 transfers the parameter SFT of the reference timing to the modulation/ power controller 12 (step S16). For example, configuration may be such that the parameter SFT of the reference timing will be transferred from the AGC/demodulation controller 11 to the modulation/power controller 12, by the AGC/demodulation controller 11 storing the parameter SFT of the reference timing to the memory 14 and the modulation/power controller 12 reading out the parameter SFT of the reference timing from the memory 14.
The AGC/demodulation controller 11 and the modulation/power controller 12 then calculate the DL DPCH timing expressed by Eq. (3) (step S17). The modulation/power controller 12 calculates the UL DPCH timing expressed by Eq. (4) (step S18), ending a series of the operations.

Correction process during Dedicated Channel Communication

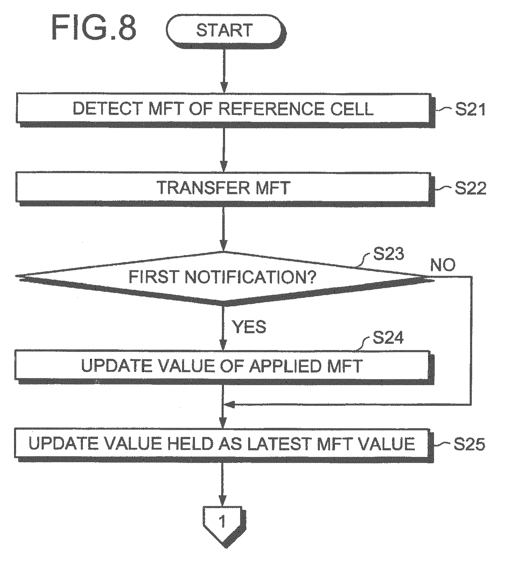

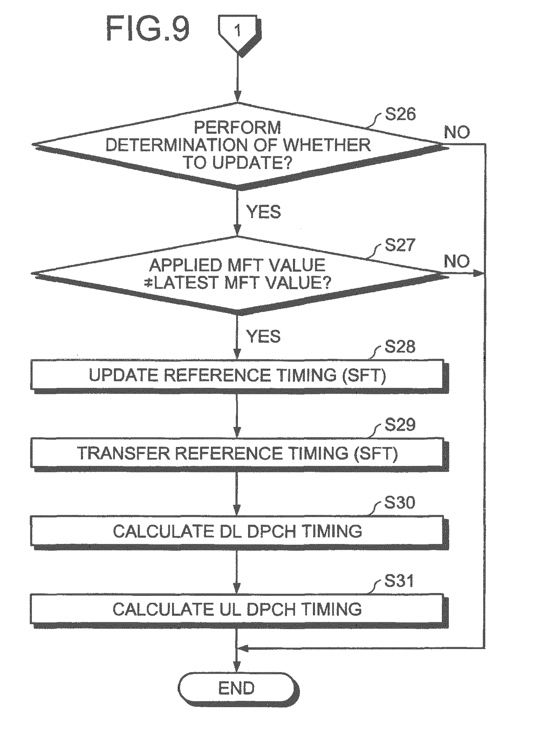

FIGs. 8 and 9 are a flowchart of the correction process of the radio communication method according to the second embodiment. As depicted in FIG. 8, during the dedicated channel communication, the AGC/demodulation controller 11 periodically performs a path search to detect the MFT of the signal to be transmitted from the reference cell (step S21). The AGC/demodulation controller 11 then transfers the MFT to the modulation/power controller 12 (step S22). The MFT as well may be transferred by way of the memory 14 in the same manner as in the transfer of the SFT.
The modulation/power controller 12 determines whether a notification of the MFT is a first notification (step S23). If the notification is the first notification (step S23: YES), the modulation/power controller 12 updates the value of the MFT to be applied in the detection of the frame offset by the decoding controller 16, to the value of the MFT transferred from the AGC/demodulation controller 11 at step S22 (step S24). The modulation/power controller 12 also updates the value held as the latest MFT value, to the value of the MFT transferred from the AGC/demodulation controller 11 at step S22 (step S25). On the other hand, if the notification of the MFT is not the first notification (step S23: NO), then the modulation/power controller 12 updates the latest MFT value but does not update the value of the MFT to be applied to the detection of the frame offset (step S25).

Then, as depicted in FIG. 9, the modulation/power controller 12 determines whether to perform the determination of whether to update the SFT, the DL DPCH, and the UL DPCH (step S26). Step S26 is performed, for example, when the mobile radio communication system is a system in which the radio communication apparatus is permitted to change the timing of the transmission signal once every predetermined period. For example, the cellular phone system of the 3GPP specification can be cited as one example of such a mobile radio communication system. In the cellular phone system of the 3GPP specification, for example, the timing of the transmission signal of a mobile station can be changed once every 20 ms, by up to one sample. If the SFT, the DL DPCH, and the UL DPCH are changed each time the modulation/power controller 12 is notified of the MFT, step S26 may be omitted.

If the determination of updating is performed (step S26: YES), then the modulation/power controller 12 determines whether the current MFT value being applied to the detection of the frame offset is not equal to the latest MFT value after updating at step S25 (step S27). Configuration may be such that if a difference between the current MFT value being applied to the detection of the frame offset and the latest MFT value is within a given range, then both will be treated as equal and that if the difference is not within the given range, then both will be treated as unequal.

If the current MFT value being applied to the detection of the frame offset and the latest MFT value are not equal (step S27: YES), then the modulation/power controller 12 updates the current MFT value being applied to the detection of the frame offset, to the latest MFT value and holds the updated value. The modulation/power controller 12 updates the current value of the parameter SFT of the reference timing to the value reflecting the MFT after the updating (step S28). In the case of the cellular phone system of the 3GPP specification, since the timing of the transmission signal of the mobile station can be changed by up to one sample as described above, the modulation/power controller 12 updates the MFT and the SFT to the values corrected by one sample.

The modulation/power controller 12 transfers to the AGC/demodulation controller 11, the parameter SFT of the reference timing after the updating (step S29). For example, the SFT may be transferred by way of the memory 14 in the same manner as in the transfer of the SFT from the AGC/demodulation controller 11 to the modulation/power controller 12 described above.

The AGC/demodulation controller 11 and the modulation/power controller 12 calculate the DL DPCH timing expressed by Eq. (3) (step S30). The modulation/power controller 12 calculates the UL DPCH timing expressed by Eq. (4) (step S.31), ending a series of operations. If the determination of updating is not performed (step S26: NO), the series of operations is ended. If the current MFT value being applied to the detection of the frame offset and the latest MFT value are equal (step S27: NO), the series of operations is ended. Thus, the discrepancy of the DL DPCH and the UL DPCH is corrected.

According to the second embodiment, since the AGC/demodulation controller 11 and the modulation/power controller 12 determine or correct the DL DPCH and the UL DPCH based on the timing difference between the value of the free-running counter and the CPICH, the timings can be synchronized between the AGC/demodulation controller 11 and the modulation/power controller 12.

(Third Embodiment)

A third embodiment is designed to perform power source control during a given period, for example, during a period of being in the state of waiting for an incoming call, in the second embodiment. Components identical to those in the second embodiment are given a same reference numerals used in the second embodiment and redundant description omitted.

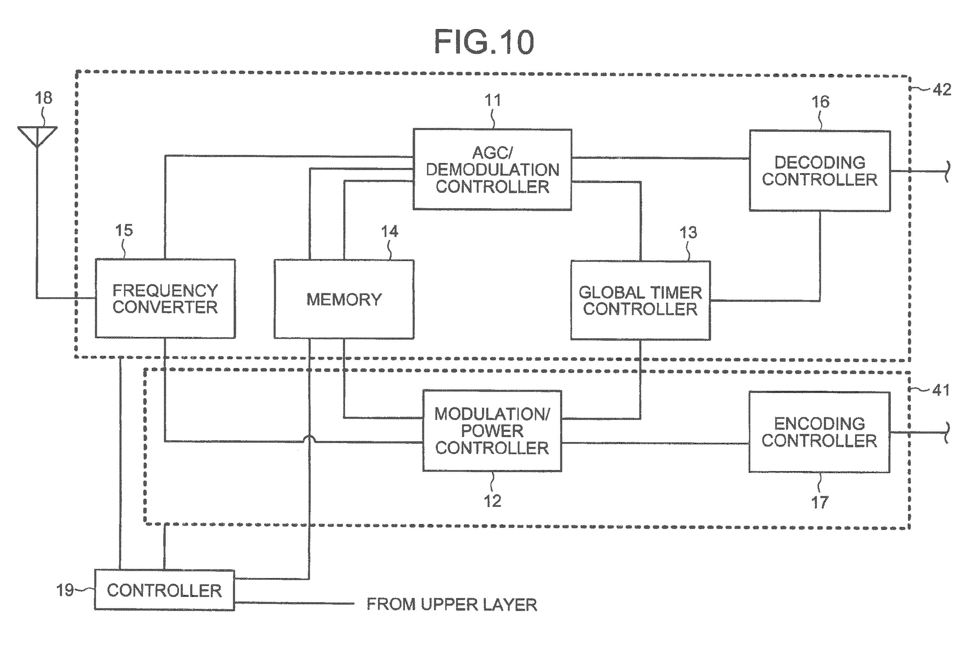

FIG. 10 is a block diagram of the radio communication apparatus according to the third embodiment. As depicted in FIG. 10, the radio communication apparatus according to the third embodiment has a controller 19 to perform the power source control in the radio communication apparatus according to the embodiment. The controller 19 separately controls the power source of a transmitting side block 41 including the modulation/power controller 12 and the encoding controller 17 and the power source of a receiving side block 42 including the AGC/demodulation controller 11 and the decoding controller 16. The receiving side block 42 may include, for example, the global timer controller 13, the memory 14, and the frequency converter 15.

The AGC/demodulation controller 11, when the notification information can be received, recognizes that the radio communication apparatus is within a range of the cell of a base station and is in the communicating state. The AGC/demodulation controller 11, when the notification information cannot be received, recognizes that the radio communication apparatus is not within the range of the cell of a base station, namely, the apparatus is out of the range of the cell. The AGC/demodulation controller 11 stores in the memory 14 the information of whether the radio communication apparatus is in the communicating state or is out of the range of the cell.

The controller 19 reads out from the memory 14, the information of whether the apparatus is in the communicating state or is out of the range of the cell and performs the power source control. For example, when the radio communication apparatus is out of the range of the cell, since the radio communication apparatus cannot transmit, the controller 19 turns off the power source of the transmitting side block 41. When the radio communication apparatus is in the state of waiting, the controller 19, by a message from the upper layer, recognizes that the radio communication apparatus is in the state of waiting. For example, when the radio communication apparatus is in the state of waiting, since the radio communication apparatus is not required to perform the transmission processing, the controller 10 turns off the power source of the transmitting side block 41.

Even when the radio communication apparatus is out of the range of the cell, the power source of the receiving side block 42 may be in the "on" state since the radio communication apparatus, when moving and entering the cell of a base station, is required to receive the notification information. When the radio communication apparatus is in the state of waiting, the power source of the receiving side block 42 may be in the "on" state since the radio communication apparatus is required to respond to a call from the base station at the time of an incoming call. In the "off" state of the power source of the transmitting side block 41, since the timings of the AGC/demodulation controller 11 and the modulation/power controller 12 are not required to be synchronized, the global timer controller 13 may be in the "off" state. Alternatively, the global timer controller 13 may be in an activated state even when the power source of the transmitting side block 41 is in the "off" state. In this case, the AGC/demodulation controller 11 can recognize the timing of the radio signal.

According to the third embodiment, since the power source of the transmitting side block 41 is put in the "off" state when the radio communication apparatus is out of the range of the cell or is in the state of waiting, power consumption can be reduced. In particular, during the operation of the radio communication apparatus, since the time for which the radio communication apparatus is in the state of waiting usually constitutes a large part of the operating time, the power consumption can be reduced.

EXPLANATIONS OF LETTERS OR NUMERALS

1 reception processing unit
2 transmission processing unit
3 timer controller
4 memory
19 controller

**Claims**

1. A radio communication apparatus comprising:

   a reception processing unit that processes a received signal;
   a transmission processing unit that processes a transmission signal;
   a timer controller that updates a value of a timer referred to by the reception processing unit and the transmission processing unit; and
   a memory that stores a timing discrepancy amount output from the reception processing unit, wherein
   the reception processing unit obtains an amount of discrepancy between timing information included in the received signal and timing information obtained from the timer controller, determines the timing for the received signal based on the amount of discrepancy, and stores the amount of discrepancy as the timing discrepancy amount to the memory, and
   the transmission processing unit reads out the amount of discrepancy from the memory and determines the timing for the transmission signal based on the amount of discrepancy.

2. The radio communication apparatus according to claim 1, wherein
   a hardware block that performs demodulation processing of the reception processing unit and a hardware block that performs modulation processing of the transmission processing unit are different.

3. The radio communication apparatus according to claim 2, wherein
   the reception processing unit obtains the amount of discrepancy based on a difference of a number sequentially appended to a first unit time obtained from the value of the timer and a number sequentially appended to a second unit time of the received signal, and an elapsed period from a first boundary of the first unit time obtained from the value of the timer until a second boundary of the second unit time of the received signal, subsequent to and closest to the first boundary.

4. The radio communication apparatus according to claim 2, wherein
the reception processing unit:

stores to the memory, an elapsed period from a first boundary of a first unit time obtained from the value of the timer until a second boundary of a second unit time of the received signal, subsequent to and closest to the first boundary,
reads out from the memory, the amount of discrepancy updated by the transmission processing unit, and
updates the timing for the received signal based on the amount of discrepancy updated by the transmission processing unit, and

the transmission processing unit:

reads out the elapsed period from the memory,
updates the amount of discrepancy based on the elapsed period,
updates the timing for the transmission signal based on the updated amount of discrepancy, and
stores the updated amount of discrepancy to the memory.

5. The radio communication apparatus according to claim 2, comprising:

a controller that controls a supply of power and a suspension of power to the reception processing unit and to the transmission processing unit, wherein
the controller suspends power to the transmission processing unit when the radio communication apparatus is in a state of waiting for an incoming call or is out of a range of communication.

6. A radio communication method comprising:

respectively executed by a reception processing unit that processes a received signal,

detecting timing information included in the received signal;
obtaining an amount of discrepancy between the timing information and timing information obtained from a timer controller that updates a value of a timer that is referred to by the reception processing unit and a transmission processing unit that processes a transmission signal;
determining a timing for the received signal based on the amount of discrepancy; and
transferring the amount of discrepancy to the transmission processing unit; and comprising:

executed by the transmission processing unit,

determining a timing for the transmission signal based on the amount of discrepancy transferred from the reception processing unit.

7. The radio communication method according to claim 6, comprising:

executed by the reception processing unit,

transferring to the transmission processing unit, an elapsed period that is from a given boundary of a unit time obtained from the value of the timer until a boundary of a unit time of the received signal, subsequent to and closest to the given boundary;

respectively executed by the transmission processing unit,

updating the amount of discrepancy based on the elapsed period transferred from the reception processing unit;
updating the timing for the transmission signal based on the updated amount of discrepancy; and
transferring the updated amount of discrepancy to the reception processing unit; and

executed by the reception processing unit,

updating the timing for the received signal based on the updated amount of discrepancy transferred from the transmission processing unit.

FIG.1

EP 2 634 924 A1

FIG.2   START

DETECT TIMING INFORMATION INCLUDED IN
RECEIVED SIGNAL   —S1

CALCULATE AMOUNT OF DISCREPANCY
BETWEEN TIMING INFORMATION   —S2

DETERMINE TIMING FOR RECEIVED SIGNAL   —S3

TRANSFER AMOUNT OF DISCREPANCY OF
TIMING INFORMATION   —S4

DETERMINE TIMING FOR TRANSMISSION
SIGNAL   —S5

END

FIG.3

EP 2 634 924 A1

FIG.4

# FIG.5

EP 2 634 924 A1

# FIG.6

1024 CHIPS

32

UL DPCH TIMING

| 0 | ... |

DOFF

DL DPCH TIMING

| 0 | ... |

31

SFT

CPICH
TIMING(SFN)

| 0 | ... |

26

MFN TIMING

| 0 | ... |

21

FIG.7

START

DETECT MFT OF REFERENCE CELL — S11

TRANSFER DEMODULATION RESULTS OF PCCPHC — S12

TRANSFER MFT — S13

DETECT FRAME OFFSET — S14

CALCULATE REFERENCE TIMING (SFT) — S15

TRANSFER REFERENCE TIMING (SFT) — S16

CALCULATE DL DPCH TIMING — S17

CALCULATE UL DPCH TIMING — S18

END

FIG.8

START

DETECT MFT OF REFERENCE CELL — S21

TRANSFER MFT — S22

FIRST NOTIFICATION? — S23 — NO

YES

UPDATE VALUE OF APPLIED MFT — S24

UPDATE VALUE HELD AS LATEST MFT VALUE — S25

1

# FIG.9

```
                    ┌─1─┐
                    └───┘
                      │
                      ▼
           ╱─────────────────────╲        S26
         ╱     PERFORM             ╲        NO
        ⟨ DETERMINATION OF WHETHER  ⟩──────────┐
         ╲     TO UPDATE?          ╱           │
           ╲─────────────────────╱             │
                      │ YES                     │
                      ▼                         │
           ╱─────────────────────╲        S27   │
         ╱   APPLIED MFT VALUE     ╲      NO     │
        ⟨   ≠LATEST MFT VALUE?      ⟩────────────┤
         ╲                        ╱             │
           ╲─────────────────────╱             │
                      │ YES                     │
                      ▼                    S28   │
        ┌─────────────────────────────┐         │
        │ UPDATE REFERENCE TIMING (SFT)│        │
        └─────────────────────────────┘         │
                      │                    S29   │
                      ▼                          │
        ┌─────────────────────────────┐         │
        │TRANSFER REFERENCE TIMING (SFT)│       │
        └─────────────────────────────┘         │
                      │                    S30   │
                      ▼                          │
        ┌─────────────────────────────┐         │
        │   CALCULATE DL DPCH TIMING   │        │
        └─────────────────────────────┘         │
                      │                    S31   │
                      ▼                          │
        ┌─────────────────────────────┐         │
        │   CALCULATE UL DPCH TIMING   │        │
        └─────────────────────────────┘         │
                      │                          │
                      ▼◀────────────────────────┘
                 ╭──────────╮
                 │   END    │
                 ╰──────────╯
```

# FIG.10

EP 2 634 924 A1

## INTERNATIONAL SEARCH REPORT

| | International application No. |
|---|---|
| | PCT/JP2010/069137 |

A. CLASSIFICATION OF SUBJECT MATTER
*H04B1/40*(2006.01)i, *H04W56/00*(2009.01)i

According to International Patent Classification (IPC) or to both national classification and IPC

B. FIELDS SEARCHED

Minimum documentation searched (classification system followed by classification symbols)
H04B1/38-1/58, H04W4/00-99/00

Documentation searched other than minimum documentation to the extent that such documents are included in the fields searched
Jitsuyo Shinan Koho            1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-174215 A  (NetIndex Inc.), 29 June 2006 (29.06.2006), entire text; all drawings (Family: none) | 1-7 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 17 November, 2010 (17.11.10) | 30 November, 2010 (30.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7131408 B

- JP H7212269 B

**Non-patent literature cited in the description**

- *3GPP TS 25.211,* December 2009